(19) Europäisches Patentamt
European Patent Office
Office européen des brevets

(11) **EP 3 467 535 B1**

(12) **FASCICULE DE BREVET EUROPEEN**

(45) Date de publication et mention
de la délivrance du brevet:
**27.11.2019 Bulletin 2019/48**

(51) Int Cl.:
***G01S 5/02*** *(2010.01)*  ***G01S 5/14*** *(2006.01)*
***H04W 64/00*** *(2009.01)*

(21) Numéro de dépôt: **18198668.8**

(22) Date de dépôt: **04.10.2018**

(54) **PROCÉDÉ DE LOCALISATION D'UNE BORNE D'ACCÈS À UN RÉSEAU DE COMMUNICATION ET APPAREIL COMPORTANT UN PROCESSEUR CONFIGURÉ POUR METTRE EN OEUVRE LE PROCÉDÉ**

LOKALISIERUNGSVERFAHREN EINER BASISSTATION FÜR EIN KOMMUNIKATIONSNETZ UND VORRICHTUNG MIT EINEM PROZESSOR, DER ZUR DURCHFÜHRUNG DER VERFAHREN KONFIGURIERT IST

METHOD FOR LOCATING AN ACCESS TERMINAL TO A COMMUNICATION NETWORK AND APPARATUS COMPRISING A PROCESSOR CONFIGURED TO CARRY OUT THE METHOD.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.10.2017 FR 1759406**

(43) Date de publication de la demande:
**10.04.2019 Bulletin 2019/15**

(73) Titulaire: **Commissariat à l'énergie atomique et aux énergies alternatives**
**75015 Paris (FR)**

(72) Inventeurs:
• **PEREIRA DA SILVA, Alex**
**38400 SAINT MARTIN D'HERES (FR)**
• **LEIRENS, Sylvain**
**38119 PIERRE CHATEL (FR)**

(74) Mandataire: **Brevalex**
**95, rue d'Amsterdam**
**75378 Paris Cedex 8 (FR)**

(56) Documents cités:
**EP-A1- 2 500 743    US-A1- 2011 059 752**
**US-A1- 2015 172 854    US-A1- 2017 215 166**

Printed by Jouve, 75001 PARIS (FR)

**Description**

**DOMAINE TECHNIQUE**

Le domaine de l'invention est celui des réseaux de communication sans fil. L'invention porte plus particulièrement sur la localisation dans l'environnement d'une borne d'accès sans fil à un réseau de communication, telle qu'une borne Wi-Fi, et l'estimation d'un modèle de propagation d'une telle borne.

**ÉTAT DE LA TECHNIQUE ANTÉRIEURE**

Les techniques classiquement utilisées pour réaliser la localisation de bornes Wi-Fi sont basées sur l'estimation des distances entre les bornes et des utilisateurs de terminaux mobiles. Ces distances peuvent être estimées par des différentes méthodes, comme celles exploitant le temps aller-retour RTT (« Round-Trip Time »), la différence du temps d'arrivée TDoA (« Time Différence of Arrivai »), et l'angle d'arrivée AoA (« Angle of Arrivai »). Ces techniques nécessitent cependant soit quelques informations sur la position absolue d'au moins une borne Wi-Fi, soit les positions des utilisateurs mobiles.

Une autre approche consiste à diriger un utilisateur vers une borne Wi-Fi en mesurant constamment l'intensité du signal reçu par son terminal mobile. Cette approche a pour contrainte le fait que le déplacement de l'utilisateur dans son environnement n'est pas libre.

On connaît de l'article de Zhuang, Y. et al., « Fast Wi-Fi Access Point Localization and Autonomous Crowdsourcing », Ubiquitous Positioning Indoor Navigation and Location Based Service (UPINLBS), 2014, une technique qui permet d'estimer la localisation d'une borne Wi-Fi et son modèle de propagation en utilisant une approche de détection en foule (*crowdsensing*) qui exploite des mesures d'un indicateur de puissance en réception (indicateur RSSI pour « Received Signal Strength Indicator ») de plusieurs utilisateurs en déplacement libre dans leur environnement. Cette technique nécessite que chaque terminal mobile d'utilisateur intègre un système de navigation portable fiable (« Trusted Portable Navigator » qui désigne un navigateur qui intègre à la fois des capteurs inertiels et un système de navigation par satellite) apte à fournir la position de l'utilisateur à chaque point de mesure. La résolution d'un système d'équations par la méthode des moindres carrés pondérés non linéaires permet d'estimer la localisation de la borne Wi-Fi ainsi que les valeurs des paramètres de son modèle de propagation. Le document US2015172854 décrit un procédé qui comprend une étape de calcul de la localisation d'au moins un ou plusieurs points d'accès sans fil en utilisant au moins un ou plusieurs points situés sur une trajectoire.

L'article de Yang, J. et al., « Indoor Localization Using Improved RSS-Based Lateration Methods», Global Télécommunications Conference, 2009, présente une méthode qui permet également d'estimer un modèle de propagation, mais avec l'inconvénient de nécessiter plusieurs bornes Wi-Fi. Les paramètres du modèle de propagation ainsi que la position de la borne sont déterminés tous à la fois à partir d'un algorithme itératif qui résout un problème non-linéaire.

**EXPOSÉ DE L'INVENTION**

L'invention s'inscrit dans la lignée de l'article de Zhuang, Y. et al. précité en ce qu'elle vise à proposer une technique permettant d'estimer la localisation d'une borne d'accès sans fil ainsi que son modèle de propagation en utilisant une approche de « crowdsensing » pour recueillir des mesures réalisées par des utilisateurs en déplacement libre dans leur environnement. L'invention vise plus spécifiquement une technique pour la localisation relative de la borne par rapport à l'utilisateur qui ne nécessite ni information sur la localisation de la borne, ni information sur la localisation des utilisateurs.

L'invention concerne ainsi un procédé de localisation d'une borne d'accès sans fil à un réseau de communication, comprenant les étapes suivantes :

- reconstruction d'une trajectoire suivie par un dispositif mobile lors d'un déplacement au cours duquel le dispositif mobile réalise des mesures successives d'un indicateur lié à la distance séparant le dispositif mobile de la borne d'accès ;
- détermination d'une localisation de réalisation de chacune desdites mesures sur la trajectoire ;
- sélection et évaluation d'une localisation possible de la borne d'accès, ladite évaluation comprenant le calcul, pour chaque mesure parmi tout ou partie desdites mesures, d'un écart entre la distance séparant la localisation possible de la borne d'accès de la localisation de réalisation de la mesure et une distance estimée à l'aide de la mesure et d'un modèle de propagation reliant ledit indicateur et la distance, et le calcul d'une erreur de localisation à partir des écarts calculés.

Contrairement à la technique présentée dans l'article Zhuang, Y. et al., l'invention évalue la position probable d'une borne au moyen d'une procédure linéaire simple et utilise la relation entre indicateur type RSSI et distance (modèle de propagation) pour raffiner l'estimation de la position de la borne et du modèle de propagation.

L'évaluation de la position probable d'une borne comprend en outre une actualisation du modèle de propagation. Ainsi, ladite évaluation comprend la détermination de paramètres du modèle de propagation à partir de tout ou partie des mesures et des distances séparant la localisation possible de la borne d'accès de chacune des localisations de réalisation d'une mesure.

Certains aspects préférés mais non limitatifs de ce procédé sont définis dans les revendications dépendantes.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 est un schéma représentant la reconstruction de la trajectoire suivie par le dispositif mobile lors d'un déplacement où il détecte deux bornes d'accès sans fil ;
- la figure 2 est un schéma qui illustre la détermination des paramètres d'un modèle de propagation permettant de relier l'indicateur mesuré à la distance relative de la borne par rapport au dispositif mobile ;
- la figure 3 est un schéma qui illustre un mode de réalisation possible de la sélection de localisations possibles d'une borne d'accès ;
- la figure 4 est un schéma qui illustre une variante de réalisation de la sélection de localisations possibles d'une borne d'accès permettant de ne pas venir évaluer des localisations possibles jugées improbables ;
- la figure 5 est un schéma qui illustre un autre mode de réalisation possible de la sélection de localisations possibles d'une borne d'accès ;
- la figure 6 est un ordinogramme d'un procédé de localisation selon un mode de réalisation possible de l'invention ;
- la figure 7 illustre la reconstruction de la trajectoire suivie par un dispositif mobile pour la localisation de trois bornes d'accès.

## EXPOSÉ DÉTAILLÉ DE MODES DE RÉALISATION PARTICULIERS

L'invention concerne un procédé de localisation d'une borne d'accès sans fil à un réseau de communication. Le procédé exploite des mesures réalisées par un dispositif mobile d'un indicateur lié à la distance séparant le dispositif mobile de la borne d'accès. Ces mesures sont successivement réalisées par le dispositif mobile au cours d'un déplacement de celui-ci dans son environnement. Ce déplacement est libre, i.e. non imposé. L'indicateur est par exemple un indicateur de puissance en réception RSSI.

Le dispositif mobile est un appareil de communication sans fil transporté par un utilisateur ou intégré dans un robot. L'utilisateur ou le robot effectue un déplacement dans un environnement où l'appareil de communication sans fil est susceptible de détecter une ou plusieurs bornes d'accès. Dans un exemple de réalisation, le dispositif mobile est un téléphone intelligent (*smartphone*) et la ou les bornes d'accès sont des bornes Wi-Fi. L'invention s'étend toutefois à d'autres types de dispositifs, ainsi qu'à d'autres types de bornes d'accès comme des balises Bluetooth ou des stations de bases d'un réseau cellulaire.

Le procédé comprend différentes étapes qui peuvent chacune être mises en œuvre indifféremment par un processeur du dispositif mobile lui-même ou par un processeur d'un serveur distant auquel les données nécessaires sont communiquées (par exemple les mesures de l'indicateur).

Le procédé comprend une étape de reconstruction d'une trajectoire suivie par le dispositif mobile lors du déplacement. Cette reconstruction met en œuvre un algorithme d'odométrie exploitant des mesures réalisées par un ou plusieurs des capteurs embarqués au sein du dispositif mobile.

Dans un mode de réalisation possible, l'algorithme d'odométrie est une navigation à l'estime pour piéton (PDR pour « Pedestrian Dead Reckoning ») mettant en œuvre une détection de pas et de changement de direction de marche lors du déplacement. La détection de pas est typiquement réalisée au moyen d'un accéléromètre, et la détection de changement de direction est typiquement réalisée au moyen d'un gyroscope ou gyromètre. La trajectoire reconstruite est ainsi constituée d'une succession de segments rectilignes, où chaque extrémité d'un segment modélise un pas et où un angle entre deux segments successifs modélise un changement de direction de marche.

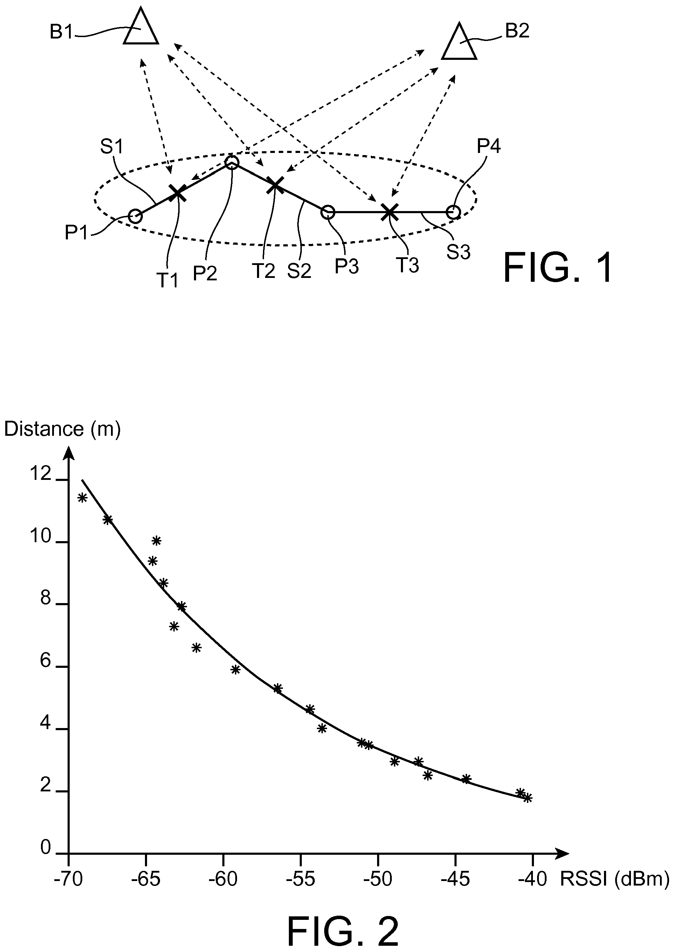

On a représenté sur la figure 1 un exemple de reconstruction d'une trajectoire suivie par un dispositif mobile lors d'un déplacement où il détecte deux bornes d'accès sans fil B1, B2. La trajectoire comprend trois segments dont les extrémités P1, P2, P3, P4 correspondent à des pas réalisé par l'utilisateur du dispositif mobile. Chacun de ces pas est horodaté, avec $t_{sj}$ l'instant où le pas s d'un utilisateur $j$ est détecté.

L'invention s'étend à d'autres méthodes de reconstruction de trajectoire, comme le « ranging », qui est une technique permettant à des robots de détecter des obstacles dans l'environnement à l'aide de capteurs (cameras, LIDAR, SONAR, etc.) dont ils sont équipé. Si les positions des obstacles sont connues, le robot peut tracer toute sa trajectoire (déplacement et changement de direction).

Lors de son déplacement, le dispositif mobile détecte les bornes d'accès B1, B2 et réalise, pour chacune des bornes d'accès, des mesures de l'indicateur de puissance du signal reçu. Cet indicateur varie approximativement avec l'inverse de la distance séparant le dispositif mobile (à l'instant de réalisation de la mesure) de la borne d'accès correspondant à la mesure. Reprenant l'exemple de la figure 1, des mesures de l'indicateur T1, T2, T3 sont réalisées au cours du déplacement, et suite à la reconstruction de la trajectoire, le procédé comprend une étape de détermination d'une localisation de réalisation de chacune desdites mesures sur la trajectoire.

Connaissant les instants de réalisation des mesures de l'indicateur ($t_{kj}$ est ainsi l'instant où la k-ième mesure est réalisée par l'utilisateur j), et la trajectoire reconstruite (avec $t_{sj}$ l'instant où le pas s d'un utilisateur $j$ est détecté et $(\bar{x}_{sj}, \bar{y}_{sj})$ la localisation du pas s estimée par la reconstruction de trajectoire), il est possible de déterminer la localisation de réalisation de chacune des mesures sur la trajectoire. Par exemple, lorsque $t_{s-1j} < t_{kj} \leq t_{sj}$, la localisation $(x_{kj}, y_{kj})$ de réalisation de la k-ième mesure de l'utilisateur $j$ s'exprime selon :

$$\begin{cases} x_{kj} = \bar{x}_{sj} - \Delta t_{ksj}(\bar{x}_{sj} - \bar{x}_{s-1j}) \\ y_{kj} = \bar{y}_{sj} - \Delta t_{ksj}(\bar{y}_{sj} - \bar{y}_{s-1j}) \end{cases}, \text{ avec } \Delta t_{ksj} = \frac{t_{sj} - t_{kj}}{t_{sj} - t_{s-1j}}.$$

Le procédé comprend la sélection d'une localisation possible de la borne d'accès et l'évaluation de cette localisation possible.

Cette évaluation comprend le calcul, pour chaque mesure parmi tout ou partie desdites mesures, d'un écart entre :

- la distance séparant la localisation possible de la borne d'accès de la localisation de réalisation de la mesure ; et
- une distance estimée à l'aide de la mesure et d'un modèle de propagation permettant de relier l'indicateur et la distance.

Considérant la k-ième mesure de l'indicateur RSSI$_k$ le long de la trajectoire, on vient ainsi calculer l'écart $d_k$ - $\hat{d}_k$, où $d_k$ désigne la distance séparant la localisation possible de la borne d'accès de la localisation de réalisation de la mesure et $\hat{d}_k$ désigne la distance estimée à partir de la k-ième mesure RSSI$_k$ en utilisant le modèle de propagation. Dans ce calcul, la localisation de l'utilisateur n'est pas requise pour déterminer une localisation relative de la borne par rapport à l'utilisateur. C'est en effet en utilisant la mesure et le modèle de propagation que cette localisation relative est déterminée. La localisation de l'utilisateur, telle qu'issue de la reconstruction de la trajectoire, est quant à elle utilisée pour calculer une localisation relative par rapport à l'utilisateur de la localisation possible de la borne d'accès.

L'évaluation de la localisation possible de la borne d'accès comprend par ailleurs le calcul d'une erreur de localisation à partir des écarts calculés. Ce calcul peut comprendre l'élévation de chaque écart au carré et le cumul des carrés des écarts. Cette erreur quadratique s'écrit ainsi $E = \sum_{k=1}^{K}(d_k - \hat{d}_k)^2$ où K désigne le nombre de mesures considérées.

L'évaluation de la localisation possible de la borne d'accès comprend la détermination de paramètres du modèle de propagation à partir de tout ou partie des mesures RSSI$_k$ et des distances $d_k$ séparant la localisation possible de la borne d'accès de chacune des localisations de réalisation d'une mesure. L'indicateur RSSI étant exprimé en dBm, la distance entre la localisation de réalisation de la mesure de l'indicateur et une borne d'accès peut par exemple s'exprimer selon le modèle de propagation $d_k = a \cdot e^{b \cdot RSSI_k}$, où $a$ et $b$ sont les paramètres à estimer, $d_k$ est la distance et RSSI$_k$ est la mesure de l'indicateur.

Comme représenté sur la figure 2, il est possible d'ordonner les mesures de l'indicateur RSSI$_k$ réalisées lors du déplacement de la plus petite à la plus grande (ces mesures correspondent aux valeurs discrètes représentées par des étoiles sur la figure), de leur associer les distances $d_k$ séparant la localisation possible de la borne d'accès de chacune des localisations de réalisation d'une mesure. Une régression exponentielle décroissante sur ces mesures peut être réalisée pour estimer les paramètres $a$ et $b$ du modèle de propagation (la relation ainsi estimée entre distance et RSSI est représentée par la courbe en trait plein sur la figure).

Dans un mode de réalisation possible, les mesures réalisées par plusieurs utilisateurs peuvent être collectées par un serveur en charge de déterminer les paramètres du modèle de propagation en exploitant les mesures multi-utilisateurs. Davantage de mesures étant ainsi disponibles, l'estimation des paramètres du modèle de propagation est plus précise.

On notera que la relation entre les mesures de l'indicateur et la distance peut être modélisée de différentes manières : régression polynomiale, interpolation, etc. Ces différents modèles peuvent être adaptés aux caractéristiques de l'environnement (par exemple atténuations due à des obstacles, caractéristiques changeantes au cours d'une journée). Par ailleurs, un autre critère que les moindres carrés pour calculer l'erreur entre la courbe de propagation estimée et les valeurs réelles des mesures de l'indicateur peut également être employé (par exemple les moindres carrés pondérés), pour prendre en compte, par exemple, une incertitude sur une mesure de l'indicateur.

Le procédé selon l'invention comprend de préférence la sélection et l'évaluation d'une pluralité de localisations possibles de la borne d'accès, et la détermination de la localisation de la borne d'accès comme étant la localisation possible associée à l'erreur de localisation la plus faible. Le modèle de propagation déterminé lors de l'évaluation de cette location est considéré comme le plus fiable.

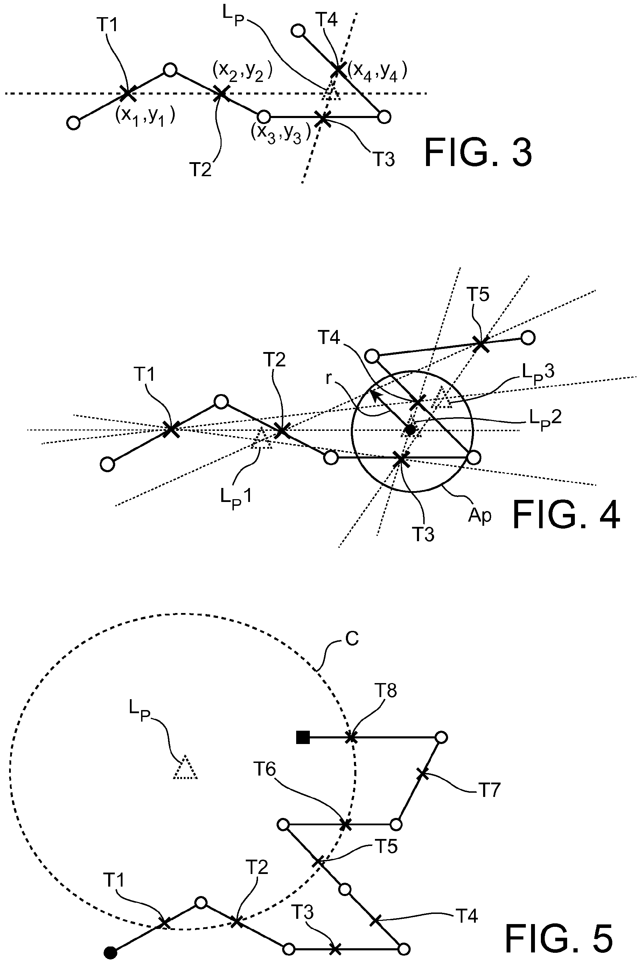

La sélection d'une pluralité de localisations possibles peut être réalisée parmi des localisations consistant chacune en le croisement de deux droites, chacune des deux droites reliant deux localisations de réalisation d'une desdites mesures. En référence à la figure 3, on choisit deux paires de localisations de réalisation d'une mesure de l'indicateur, à savoir T1, T2 et T3, T4. Les localisations de réalisation d'une mesure formant une paire n'ont pas à être successives le long de la trajectoire. Il en est de même des deux paires. L'intersection des droites passant respectivement par T1-T2 et par T3-T4 détermine une localisation possible Lp de la borne d'accès.

La localisation possible Lp : $(x,y)$ de la borne peut être déterminée par les équations linéaires suivantes :

$$\begin{cases} x = \dfrac{y_3 - y_1 + m_1 x_1 - m_2 x_3}{m_1 - m_2} \\[2em] y = y_1 + m_1(x - x_1) \end{cases}$$

où $m_1 = \dfrac{y_2 - y_1}{x_2 - x_1}$ et $m_2 = \dfrac{y_4 - y_3}{x_4 - x_3}$ sont les coefficients angulaires des deux droites qui lient les points T1: $(x_1, y_1)$ et T2 : $(x_2, y_2)$, et les points T3 : $(x_3, y_3)$ et T4: $(x_4, y_4)$, respectivement.

Cette sélection d'une localisation possible de la borne au niveau d'un croisement de droites est basée sur le fait que plus le nombre de mesures est élevé, plus la probabilité de disposer de mesures alignées avec la borne est importante. Une telle sélection ne serait pas efficace pour un utilisateur qui marcherait tout droit alors que la borne est localisée dans une région perpendiculaire à sa trajectoire. Dans un tel cas de figure, les mesures d'un autre utilisateur parcourant une autre trajectoire pourraient être considérés pour aider à localiser la borne.

Dans une variante de réalisation permettant de diminuer le temps de calcul, plusieurs localisations proches de réalisation d'une mesure peuvent être mutualisées pour constituer une localisation mutualisée qui sera utilisée pour la détermination des droites. La localisation mutualisée est par exemple le barycentre de plusieurs localisations de réalisation d'une mesure et on lui associe par exemple comme valeur de mesure la moyenne des mesures acquises en ces localisations.

Dans une autre variante de réalisation, on vient supprimer de la liste des localisations possibles (déterminées par des croisements de droites) des localisations pour lesquelles, lorsqu'on suit l'une des droites jusqu'à l'intersection trouvée, la valeur de l'indicateur diminue. Dans un tel cas en effet, l'intersection des droites ne peut pas former une localisation possible envisageable, et on ne l'intègre pas dans la suite du processus.

La figure 5 illustre une autre méthode de sélection d'une localisation possible de la borne d'accès. Selon cette méthode, lorsque des mesures de l'indicateur le long de la trajectoire présentent des valeurs similaires (par exemple les valeurs présentent entre elles un écart inférieur à un facteur de similarité prédéterminé), on peut chercher à déterminer le cercle passant au plus près des localisations de réalisation de ces mesures, par exemple au sens des moindres carrés. Le centre de ce cercle définit la localisation possible de la borne d'accès. Sur la figure 5, les mesures aux localisations T1, T2, T5, T6 et T8 sont similaires. Le cercle C passant au plus près de ces localisations a pour centre une localisation possible Lp de la borne d'accès.

Revenant à l'exemple de la sélection des localisations possibles selon la méthode de la figure 3, le nombre de localisations possibles pour une trajectoire avec K mesures est $K + \sum_{j=3}^{K-1} j \cdot \binom{j-1}{2}$ pour $K \geq 3$ (avec $K = 3$, la localisation possible coïncide avec la localisation de réalisation d'une mesure). Ce nombre de localisations possibles croit exponentiellement avec le nombre de mesures.

Pour réduire le nombre de localisations possibles à évaluer, on peut tenir compte, d'une part, de ce que les atténuations sont plus importantes pour les réalisations de la mesure de l'indicateur les plus éloignées de la borne d'accès et, d'autre part, de ce que des positions proches les unes des autres impliquent des modèles de propagation similaires.

Pour tenir compte des atténuations importantes à distance de la borne, on définit dans un mode de réalisation possible un seuil sur les mesures de l'indicateur. Ce seuil est par exemple lié à la valeur maximale ou minimale mesurée. On compare chacune des mesures à ce seuil, et lorsqu'une mesure est inférieure au seuil, on considère cette mesure peu fiable car réalisée à grande distance de la borne. Cette mesure n'est alors pas prise en compte dans la détermination des paramètres du modèle de propagation réalisée à chaque évaluation d'une localisation possible de la borne. Dans le cas contraire, des erreurs d'estimation pourraient être introduites dans les distances $\hat{d}_k$ estimées à l'aide du modèle de propagation, ce qui pourrait engendrer des erreurs d'estimation de la localisation de la borne d'accès.

Toujours pour tenir compte des atténuations importantes à distance de la borne, dans un autre mode de réalisation mis en œuvre conjointement ou alternativement au mode de réalisation présenté ci-dessus, les écarts ne sont calculés lors de l'évaluation d'une localisation possible de la borne que pour les mesures supérieures à un seuil. Ainsi, pour une trajectoire comprenant la réalisation de K mesures, on n'utilise qu'une fraction de ces mesures, à savoir celles présentant les indicateurs les plus élevés.

Le seuil mentionné ci-dessus peut être adapté aux mesures de l'indicateur, par exemple pour lier ce seuil à une incertitude sur la mesure de l'indicateur.

Toujours pour réduire le nombre de localisations possibles à évaluer, dans encore un autre mode de réalisation pouvant être mis en œuvre conjointement ou alternativement à l'un et/ou l'autre des modes de réalisation présentés ci-dessus, une localisation possible de la borne d'accès n'est pas sélectionnée lorsque cette localisation possible est présente dans une aire de proximité incluant une première localisation possible dont l'erreur de localisation associée est supérieure à l'erreur de localisation associée à une deuxième localisation possible. L'aire de proximité est par exemple un cercle de rayon r centré sur la première localisation possible. Le rayon est par exemple choisi comme deux fois la longueur entre deux pas. L'aire de proximité peut prendre d'autres formes que circulaire. Par exemple dans un bâtiment avec un couloir, l'aire de proximité peut avoir une forme elliptique. L'étendue de l'aire de proximité peut par ailleurs dépendre de la valeur des mesures de l'indicateur, avec par exemple une étendue différente selon un niveau associé à la mesure (par exemple, bas, moyen et élevé).

En référence à la figure 4, une évaluation d'une première localisation possible Lp2 à l'intersection de la droite passant par les localisations de réalisation de la mesure T3 et T4 et de la droite passant par les localisations de réalisation de la mesure T1 et T2 fournit une première erreur de localisation. Et une évaluation d'une deuxième localisation possible Lp1 à l'intersection de la droite passant par les localisations de réalisation de la mesure T1 et T3 et de la droite passant par les localisations de réalisation de la mesure T2 et T5 fournit une deuxième erreur de localisation. La première erreur de localisation (à Lp2) est supérieure à la deuxième erreur de localisation (à Lp1), de sorte que la première localisation possible Lp2 est jugée improbable. On définit une aire de proximité Ap centrée sur cette localisation improbable Lp2, ici un cercle de rayon r. Les localisations possibles présentes dans ce cercle ne sont pas sélectionnées pour faire l'objet d'une évaluation. C'est le cas de la localisation possible Lp3 située à l'intersection de la droite passant par les localisations de réalisation de la mesure T1 et T4 et de la droite passant par les localisations de réalisation de la mesure T3 et T5.

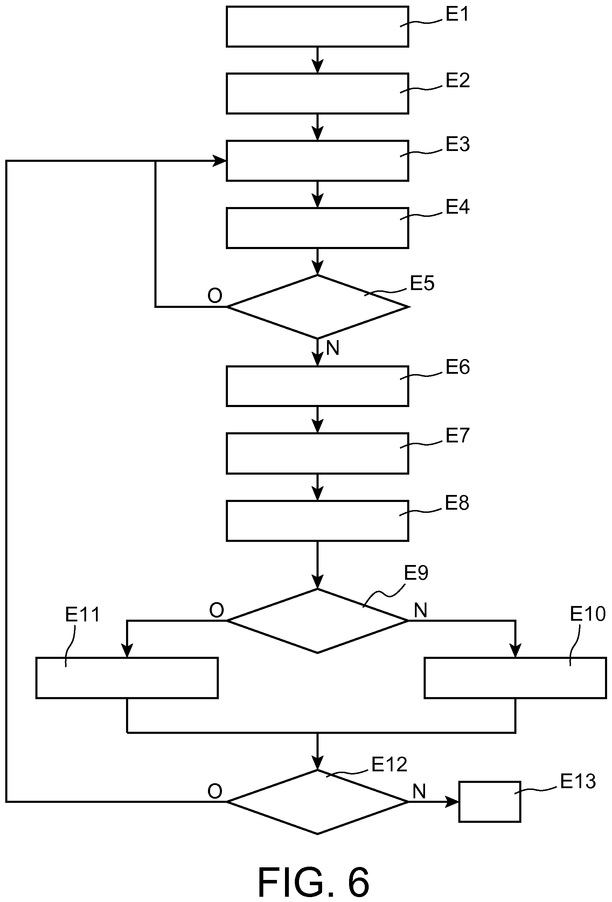

On a représenté sur la figure 6 un ordinogramme d'un procédé de localisation selon un mode de réalisation possible de l'invention. Ce procédé débute par une étape E1 de collecte des mesures de l'indicateur réalisées au cours du déplacement du dispositif mobile. Lors d'une étape E2, on confronte ces mesures à un seuil pour exclure celles inférieures au seuil. L'étape E3 consiste à sélectionner deux paires de localisations de réalisation d'une mesure. L'étape E4 consiste à sélectionner une localisation possible de la borne d'accès comme étant le point de croisement des droites passant respectivement par les localisations d'une desdites paires. A l'étape E5, il est vérifié si la localisation possible sélectionnée est présente dans une aire de proximité centrée sur une position improbable. Dans l'affirmative (« O »), il est procédé à la sélection d'une nouvelle localisation possible en rebouclant à l'étape E3. Dans la négative (« N »), on procède lors d'une étape E6 au calcul des distances $d_k$ entre la localisation possible de la borne et chacune des localisations de réalisation d'une mesure. A l'étape E7, on détermine les paramètres du modèle de propagation à partir des mesures RSSI$_k$ et des distances $d_k$. A l'étape E8, on exploite chaque mesure et le modèle de propagation précédemment déterminé pour estimer la distance $\hat{d}_k$ séparant la borne de la location de chacune des localisations de réalisation d'une mesure. Puis on calcule l'erreur de localisation $E = \sum_{k=1}^{K}\left(d_k - \hat{d}_k\right)^2$. A l'étape E9, on vérifie si cette erreur est inférieure à l'erreur de localisation la plus faible sauvegardée à ce stade. Dans l'affirmative (« O »), la nouvelle valeur est sauvegardée comme erreur minimale lors d'une étape E11. Dans la négative (« N »), on crée lors d'une étape E10 une aire de proximité centrée sur la localisation possible en cours d'évaluation. A l'étape E12, on vérifie s'il reste des localisations possibles à évaluer. Dans la négative (« N »), on met fin au procédé (étape E13) en fournissant la localisation de la borne d'accès et le modèle de propagation. Dans l'affirmative (« O »), on reboucle à l'étape E3 pour évaluer une nouvelle localisation possible.

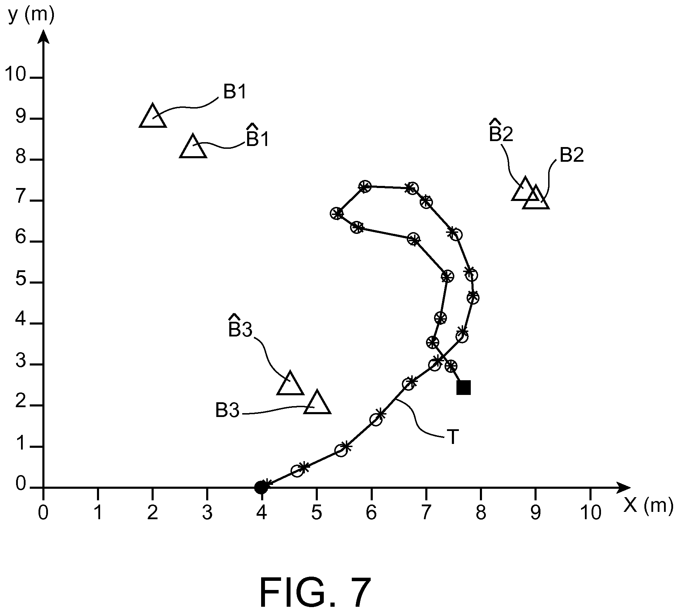

On a représenté sur la figure 7 une simulation d'un déplacement d'un utilisateur dans un bâtiment rectangulaire de 10m*10m où il détecte un réseau Wi-Fi doté de trois bornes d'accès B1, B2, B3, chacune possédant son propre identifiant. Vingt mesures de l'indicateur RSSI sont réalisées au cours de ce déplacement et rapportées sur la reconstruction de la trajectoire T déterminée au moyen d'une navigation à l'estime pour piéton. La position initiale de l'utilisateur est $(x,y)$ = (4,0) qui peut représenter l'entrée du bâtiment. Avec les 20 mesures, et en choisissant les localisations possibles comme l'intersection de droites passant par une paire de ces mesures, ce sont 14555 localisations qu'il faut évaluer. Ce chiffre peut être considérablement réduit par les critères de seuil et d'aire de proximité d'une position improbable. Le seuil est ici le même pour toutes les bornes, à savoir 1,6 fois la mesure maximale parmi toutes les mesures pour toutes les bornes (les mesures RSSI étant négatives, cf. fig. 2, ce seuil est supérieur à 1). Les aires de proximité sont des cercles dont le rayon est égal à deux fois la longueur d'un pas (considérée constante au cours du déplacement) estimée au moyen d'une navigation à l'estime pour piéton. Sur cette figure 7, $\hat{B}_1$, $\hat{B}_2$ et $\hat{B}_3$ représentent les localisations estimées des bornes B1, B2 et B3 par la mise en œuvre du procédé selon l'invention.

Le tableau ci-dessous illustre la performance du procédé de localisation selon l'invention.

| Borne | Localisation réelle de la borne | Localisation estimée de la borne | Erreur de distance (m) | Nombre de mesures éliminées par le seuil | Nombre d'aires de proximité de localisations improbables | Nombre de localisations possibles évaluées |
|---|---|---|---|---|---|---|
| B1 | (2, 9) | (2.74, 8.26) | 1.05 | 13 | 98 | 31 |
| B2 | (9, 7) | (8.81, 7.19) | 0.28 | 3 | 6700 | 524 |
| B3 | (5, 2) | (4.52, 2.48) | 0.67 | 0 | 13515 | 1116 |

Pour la borne B3, aucune mesure n'a été éliminée par le critère du seuil. Malgré cela, seulement 8% des localisations possibles ont fait l'objet d'une évaluation. On constate que l'erreur d'estimation de la borne B2 est inférieure à celle de la borne B3 malgré le fait qu'aucune mesure RSSI n'ait été éliminée pour la borne B3. Cela s'explique par le fait que la plupart les localisations de réalisation des mesures RSSI sont plus proches de la borne B2, ce qui raffine son estimation. On constate également que la borne B1 présente une erreur de distance plus élevée justement à cause de basses valeurs de RSSI, cette borne B1 étant la plus éloignée de la trajectoire T.

L'invention n'est pas limitée au procédé tel que précédemment décrit, mais s'étend également à un produit programme d'ordinateur comprenant des instructions de code de programme pour l'exécution de ce procédé lorsque ledit programme est exécuté sur un ordinateur. L'exécution du procédé peut être réalisée soit par un serveur, soit localement dans le dispositif mobile. L'invention s'étend ainsi également à un appareil disposant d'un processeur spécifiquement configuré pour mettre en œuvre ce procédé, et notamment le dispositif mobile lui-même. Le procédé peut également être mise en œuvre conjointement par le dispositif mobile et le serveur, avec par exemple le dispositif mobile qui réalise la reconstruction de la trajectoire et le serveur qui réalise la sélection et l'évaluation des localisations possibles.

Des applications possibles de la localisation obtenue par l'invention sont les suivantes.

Connaissant la localisation de la borne d'accès, l'utilisateur peut se déplacer vers celle-ci afin d'augmenter sa puissance en réception et ainsi disposer d'une connexion de meilleure qualité.

La connaissance de la localisation des bornes d'accès peut par ailleurs permettre à un utilisateur de se localiser, notamment à l'intérieur d'un bâtiment lorsque le GPS n'est pas utilisable. Par exemple, un utilisateur qui entre dans un bâtiment perd son signal GPS. Mais si les localisations des bornes d'accès sont déjà estimées par d'autres utilisateurs dans le bâtiment, le nouvel utilisateur peut continuer à se localiser à l'intérieur du bâtiment.

La distance estimée par application du modèle de propagation déterminé à l'aide des différentes mesures peut être utilisée pour améliorer la localisation. Par exemple, dans le cas où quelques mesures de la navigation à l'estime d'un utilisateur sont incertaines, cette distance estimée permet de raffiner la localisation.

## Revendications

1. Procédé de localisation d'une borne d'accès sans fil (B1, B2, B3) à un réseau de communication, comprenant les étapes suivantes :

   - reconstruction d'une trajectoire (T) suivie par un dispositif mobile lors d'un déplacement au cours duquel le dispositif mobile réalise des mesures successives d'un indicateur lié à la distance séparant le dispositif mobile de la borne d'accès ;
   - détermination d'une localisation de réalisation (T1, T2, T3) de chacune desdites mesures sur la trajectoire ;

- sélection (E3, E4) et évaluation (E6, E7) d'une localisation possible (Lp, Lp1, Lp2, Lp3) de la borne d'accès, ladite évaluation comprenant :

    ◦ la détermination, à partir de tout ou partie des mesures et des distances séparant la localisation possible de la borne d'accès de chacune des localisations de réalisation d'une mesure, de paramètres d'un modèle de propagation reliant ledit indicateur et la distance;
    ◦ le calcul, pour chaque mesure parmi tout ou partie desdites mesures, d'un écart entre la distance séparant la localisation possible de la borne d'accès de la localisation de réalisation de la mesure et une distance estimée à l'aide de la mesure et du modèle de propagation ; et
    ◦ le calcul d'une erreur de localisation à partir des écarts calculés.

2. Procédé selon la revendication 1, dans lequel la détermination des paramètres du modèle de propagation comprend une régression exponentielle décroissante effectuée sur tout ou partie des mesures.

3. Procédé selon l'une des revendications 1 et 2, comprenant la comparaison de chacune desdites mesures à un seuil et dans lequel une mesure inférieure au seuil n'est pas prise en compte dans la détermination des paramètres du modèle de propagation.

4. Procédé selon l'une des revendications 1 à 3, comprenant la comparaison de chacune desdites mesures à un seuil et dans lequel un écart est calculé lors de ladite évaluation pour chaque mesure supérieure au seuil.

5. Procédé selon l'une des revendications 1 à 4, comprenant la sélection et l'évaluation d'une pluralité de localisations possibles de la borne d'accès, et la détermination de la localisation de la borne d'accès comme étant la localisation possible associée à l'erreur de localisation la plus faible.

6. Procédé selon la revendication 5, dans lequel une localisation possible (Lp3) de la borne d'accès n'est pas sélectionnée (E5) lorsque cette localisation possible est présente dans une aire de proximité (Ap) incluant une première localisation possible (Lp2) dont l'erreur de localisation associée est supérieure à l'erreur de localisation associée à une deuxième localisation possible (Lp1).

7. Procédé selon la revendication 5, dans lequel la sélection d'une pluralité de localisations possibles est réalisée parmi des localisations consistant chacune en le croisement de deux droites, chacune des deux droites reliant deux localisations de réalisation d'une desdites mesures.

8. Procédé selon la revendication 5, dans lequel la sélection d'une pluralité de localisations possibles est réalisée parmi des localisations consistant chacune en le centre d'un cercle passant au plus près de localisations de réalisation de mesures similaires.

9. Procédé selon l'une des revendications 1 à 8, dans lequel la reconstruction de la trajectoire suivie par le dispositif mobile comprend une navigation à l'estime pour piéton mettant en œuvre une détection de pas et de changement de direction de marche lors du déplacement.

10. Procédé selon l'une des revendications 1 à 9, dans lequel l'indicateur lié à la distance séparant le dispositif mobile de la borne d'accès est un indicateur de puissance en réception.

11. Produit programme d'ordinateur comprenant des instructions de code de programme pour l'exécution du procédé selon l'une des revendications 1 à 10 lorsque ledit programme est exécuté sur un ordinateur.

12. Appareil comportant un processeur configuré pour mettre en œuvre le procédé selon l'une des revendications 1 à 10.

**Patentansprüche**

1. Verfahren zur Lokalisierung einer Station (B1, B2, B3) zum drahtlosen Zugang zu einem Kommunikationsnetz, umfassend die folgenden Schritte:

    - Rekonstruktion einer Trajektorie (T), der eine mobile Vorrichtung während einer Verlagerung folgt, in deren Verlauf die mobile Vorrichtung sukzessive Messungen eines Indikators realisiert, der mit der Distanz verbunden ist, die die mobile Vorrichtung von der Zugangsstation separiert;
- Bestimmung einer Lokalisierung der Realisierung (T1, T2, T3) von jeder der Messungen auf der Trajektorie;
- Selektion (E3, E4) und Evaluierung (E6, E7) einer möglichen Lokalisierung (Lp, Lp1, Lp2, Lp3) der Zugangsstation, wobei die Evaluierung Folgendes umfasst:

   ◦ die Bestimmung, ausgehend von allen oder einem Teil der Messungen und den Distanzen, die die mögliche Lokalisierung der Zugangsstation von jeder der Lokalisierungen der Realisierung einer Messung separieren, von Parametern eines Ausbreitungsmodells, das den Indikator und die Distanz verbindet;
   ◦ die Berechnung, für jede Messung aus allen oder einem Teil der Messungen, eines Abstands zwischen der Distanz, die die mögliche Lokalisierung der Zugangsstation von der Lokalisierung der Realisierung der Messung separiert, und einer Distanz, die mit Hilfe der Messung und des Ausbreitungsmodells abgeschätzt wird; und
   ◦ die Berechnung eines Lokalisierungsfehlers ausgehend von den berechneten Abständen.

2. Verfahren nach Anspruch 1, bei dem die Bestimmung der Parameter des Ausbreitungsmodells eine abnehmende exponentielle Regression umfasst, die auf allen oder einem Teil der Messungen durchgeführt wird.

3. Verfahren nach einem der Ansprüche 1 und 2, umfassend den Vergleich von jeder der Messungen mit einer Schwelle, und wobei eine Messung unterhalb der Schwelle bei der Bestimmung der Parameter des Ausbreitungsmodells nicht berücksichtigt wird.

4. Verfahren nach einem der Ansprüche 1 bis 3, umfassend den Vergleich von jeder der Messungen mit einer Schwelle, und wobei während der Evaluierung für jede Messung oberhalb der Schwelle ein Abstand berechnet wird.

5. Verfahren nach einem der Ansprüche 1 bis 4, umfassend die Selektion und die Evaluierung einer Mehrzahl von möglichen Lokalisierungen der Zugangsstation, und die Bestimmung der Lokalisierung der Zugangsstation als die mögliche Lokalisierung, die dem kleinsten Lokalisierungsfehler zugeordnet ist.

6. Verfahren nach Anspruch 5, bei dem eine mögliche Lokalisierung (Lp3) der Zugangsstation nicht selektioniert wird (E5), wenn diese mögliche Lokalisierung in einem Nähegebiet (Ap) vorhanden ist, das eine erste mögliche Lokalisierung (Lp2) enthält, deren zugeordneter Lokalisierungsfehler größer ist als der Lokalisierungsfehler, der einer zweiten möglichen Lokalisierung (Lp1) zugeordnet ist.

7. Verfahren nach Anspruch 5, bei dem die Selektion einer Mehrzahl von möglichen Lokalisierungen aus Lokalisierungen realisiert wird, die jeweils aus der Kreuzung von zwei Geraden bestehen, wobei jede von den zwei Geraden zwei Lokalisierungen der Realisierung einer der Messungen verbindet.

8. Verfahren nach Anspruch 5, bei dem die Selektion einer Mehrzahl von möglichen Lokalisierungen aus Lokalisierungen realisiert wird, die jeweils aus dem Zentrum eines Kreises bestehen, der am nächsten bei Lokalisierungen der Realisierung von ähnlichen Messungen verläuft.

9. Verfahren nach einem der Ansprüche 1 bis 8, bei dem die Rekonstruktion der Trajektorie, der die mobile Vorrichtung folgt, eine Abschätznavigation für einen Fußgänger umfasst, die eine Detektion von Schritten und von einer Laufrichtungsänderung während der Verlagerung durchführt.

10. Verfahren nach einem der Ansprüche 1 bis 9, bei dem der Indikator, der mit der Distanz verbunden ist, die die mobile Vorrichtung von der Zugangsstation separiert, ein Indikator der Empfangsleistung ist.

11. Computerprogrammprodukt, umfassend Programmcodeinstruktionen zur Ausführung des Verfahrens nach einem der Ansprüche 1 bis 10, wenn das Programm auf einem Computer ausgeführt wird.

12. Gerät, umfassend einen Prozessor, der dazu konfiguriert ist, das Verfahren nach einem der Ansprüche 1 bis 10 durchzuführen.

**Claims**

1. A method of localising a wireless access point (B1, B2, B3) to a communication network, comprising the steps of:

- reconstructing a trajectory (T) followed by a mobile device during a displacement during which the mobile device makes successive measurements of an indicator related to the distance separating the mobile device from the access point;
- determining a localisation (T1, T2, T3) on the trajectory at which each of said measurements is made;
- selecting (E3, E4) and evaluating (E6, E7) a possible localisation (Lp, Lp1, Lp2, Lp3) of the access point, said evaluating including:

  ◦ using all or some of the measurements and the distances separating the possible localisation of the access point from each of the localisations at which a measurement is made, determining parameters of a propagation model relating said indicator and the distance;
  ◦ calculating, for each measurement among all of some of said measurements, of a difference between the distance separating the possible localisation of the access point and the localisation at which the measurement is made, and a distance estimated using the measurement and the propagation model; and
  ◦ calculating a localisation error from the calculated differences.

2. The method according to claim 1, in which determining the parameters of the propagation model includes a decreasing exponential regression made on all or some of the measurements.

3. The method according to any one of claims 1 and 2, comprising the comparison of each of said measurements with a threshold and in which a measurement below the threshold is ignored in the determining of the parameters of the propagation model.

4. The method according to any one of claims 1 to 3, comprising the comparison of each of said measurements with a threshold and in which a difference is calculated during said evaluating for each measurement above the threshold.

5. The method according to any one of claims 1 to 4, comprising selecting and evaluating a plurality of possible localisations of the access point, and determining the localisation of the access point as being the possible localisation associated with the lowest localisation error.

6. The method according to claim 5, in which a possible localisation (Lp3) of the access point is not selected (E5) when this possible localisation is present in a proximity area (Ap) including a first possible localisation (Lp2) which has an associated localisation error larger than the localisation error associated with a second possible localisation (Lp1).

7. The method according to claim 5, in which selecting a plurality of possible localisations of the access point comprises selecting localisations from among localisations each being the intersection of two straight lines, each of the two straight lines connecting two localisations at which one of said measurements is made.

8. The method according to claim 5, in which selecting a plurality of possible localisations of the access point comprises selecting localisations from among localisations each being the centre of a circle passing at the closest to the localisations at which similar measurements are made.

9. The method according to any one of claims 1 to 8, in which reconstructing the trajectory followed by the mobile device includes pedestrian dead reckoning navigation making use of a step and walking direction change detection during the displacement.

10. The method according to any one of claims 1 to 9, in which the indicator related to the distance separating the mobile device from the access point is a reception power indicator.

11. A computer program product including program code instructions for performing the method according to any one of claims 1 to 10 when said program is executed on a computer.

12. An apparatus comprising a processor configured to perform the method according to any one of claims 1 to 10.

FIG. 1

FIG. 2

FIG. 3

FIG. 4

FIG. 5

FIG. 6

FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015172854 A

**Littérature non-brevet citée dans la description**

- **ZHUANG, Y. et al.** Fast Wi-Fi Access Point Localization and Autonomous Crowdsourcing. *Ubiquitous Positioning Indoor Navigation and Location Based Service (UPINLBS),* 2014

- **YANG, J. et al.** Indoor Localization Using Improved RSS-Based Lateration Methods. *Global Télécommunications Conference,* 2009